# FASCICULE DE BREVET EUROPEEN

(11) **EP 2 989 032 B1**
(45) Date de publication et mention de la délivrance du brevet: **03.05.2017**
(21) Numéro de dépôt: 14714980.1
(22) Date de dépôt: 27.03.2014
(51) Int. Cl.: B65G 47/86

(54) **INSTALLATION DE TRAITEMENT DE RECIPIENTS COMPRENANT DES DISPOSITIFS DE MAINTIEN CONFIGURES POUR COOPERER ENSEMBLE**
ANLAGE ZUR BEHANDLUNG VON BEHÄLTERN MIT HALTEVORRICHTUNGEN FÜR GEGENSEITIGEN ZUSAMMENARBEITEN
INSTALLATION FOR TREATING CONTAINERS COMPRISING HOLDING DEVICES DESIGNED TO COOPERATE MUTUALLY

(30) Priorité: 24.04.2013 FR 1353750
(43) Date de publication de la demande: 02.03.2016
(73) Titulaire: Serac Group, 72400 La Ferté Bernard (FR)
(72) Inventeur: GRUSON, Bertrand, F-50290 Breville Sur Mer (FR)
(74) Mandataire: Decorchemont, Audrey Véronique Christèle
(86) Numéro de dépôt international: PCT/EP2014/056237
(87) Numéro de publication internationale: WO 2014/173620

(56) Documents cités:
- EP-A1- 1 939 117
- WO-A1-02/090220
- DE-A1- 10 146 118

## Description

L'invention concerne une installation de traitement de récipients comprenant des dispositifs de maintien configurés pour coopérer ensemble.

### ARRIERE PLAN TECHNOLOGIQUE DE L'INVENTION

Il est connu des installations de traitement de récipients comme par exemple des installations permettant le remplissage et le bouchage de récipients et éventuellement le lavage et le rinçage préalables des récipients ou encore la stérilisation des récipients. De telles installations comportent plusieurs plateformes rotatives qui sont équipés de dispositifs de maintien des récipients et qui sont adjacentes les unes aux autres de manière à définir une trajectoire de déplacement des récipients dans l'installation correspondante. Chaque dispositif de maintien est agencé pour saisir le corps ou le goulot d'un récipient pour maintenir le récipient lors du déplacement de la plateforme correspondante.

Il existe par exemple des dispositifs de maintien sous forme de pinces qui comportent un mors fixe et un mors mobile articulé sur le mors fixe par un axe de rotation de manière que le mors mobile pivote entre une position de fermeture et une position de fermeture du dispositif de maintien. L'ouverture du dispositif de maintien est usuellement commandée par un galet solidaire du mors mobile qui coopère avec une came solidaire de la plateforme correspondante. Un tel dispositif, selon le préambule de la revendication 1, est connu par exemple du document DE 101 46 118 A1. La mise en place des chemins de came est relativement contraignante et complexifie la structure de l'installation.

En outre, il est nécessaire de nettoyer régulièrement les installations de traitement de récipients, notamment celles utilisées pour le conditionnement de produits alimentaires.

Toutefois, il a été constaté que des saletés et autres impuretés ont tendance à s'accumuler au niveau de la came et du galet. Or ces pièces sont difficiles à nettoyer du fait de leur accès difficile, notamment lorsque le dispositif de maintien est fixé à la partie inférieure de la plateforme correspondante.

En particulier, certaines installations sont équipées de circuit de nettoyage pourvu de buses permettant de pulvériser une solution de nettoyage sur les différentes pièces de l'installation. Ce circuit de nettoyage est cependant inefficace pour le nettoyage des systèmes galets-cames des dispositifs de maintien et plateformes associées sauf à multiplier les buses et viser spécifiquement lesdits systèmes galets-cames.

Cet inconvénient est particulièrement désavantageux si l'installation de traitement est utilisée dans le domaine de l'agroalimentaire pour lequel les normes d'hygiène sont particulièrement strictes.

### OBJET DE L'INVENTION

Un but de l'invention est de proposer une installation de traitement de récipients ayant des dispositifs de maintien de récipient qui soient plus simples à actionner et à nettoyer.

### BREVE DESCRIPTION DE L'INVENTION

A cet effet, on propose une installation de traitement de récipients comportant au moins une première plateforme comprenant au moins un premier dispositif de maintien comportant une première paire de mors et une deuxième plateforme comprenant au moins un deuxième dispositif de maintien comprenant une deuxième paire de mors, chaque paire de mors comportant un mors fixe, un mors mobile déplaçable entre une position fermée de maintien du récipient et une position ouverte de libération du récipient et un élément élastique agencé pour rappeler le mors mobile vers la position fermée.

Selon l'invention, les deux paires de mors sont pourvues de moyens de leur coopération pour permettre en service le transfert du récipient d'une plateforme à une autre par la coopération des paires de mors, les moyens de coopération étant configurés pour que l'une des paires de mors puisse agir sur le déplacement du mors mobile de l'autre paire de mors relativement au mors fixe correspondant.

Ainsi les deux paires de mors montées sur des plateformes différentes coopèrent pour permettre le transfert du récipient d'une plateforme à une autre, ce qui permet de simplifier grandement l'installation en permettant de s'affranchir notamment des systèmes galets - cames de l'art antérieur. L'installation s'avère donc bien plus simple et rapide à nettoyer.

De plus, puisqu'il n'est pas nécessaire de relier le mors mobile à la plateforme associée pour permettre un actionnement par came, les mors mobiles et les mors fixes des dispositifs de maintien de l'invention ont des structures simplifiées et il s'avère bien plus aisé d'accéder aux mors fixes et aux mors mobiles. Il est donc possible de nettoyer bien plus facilement lesdits mors.

Par ailleurs, la simplification de l'installation, et notamment de la structure des mors fixes et mobiles, permet d'augmenter la fiabilité de l'installation et de réduire son coût de fabrication. En outre, il est possible d'envisager une standardisation des dispositifs de maintien d'un mode de réalisation de l'invention à un autre de par la simplification de la structure des mors fixes et mobiles.

Selon un mode de réalisation particulier, les moyens de coopération comportent un pion qui est agencé sur le mors fixe de l'une des paires de mors et un doigt de manoeuvre qui est agencé sur le mors mobile de l'autre paire de mors de telle manière que le pion prenne contact avec le doigt de manoeuvre au voisinage d'un point de tangence des plateformes.

De façon particulière, le pion et le doigt de manoeuvre sont agencés de sorte que la coopération du pion et du doigt de manoeuvre entraîne le déplacement du mors mobile pourvu du doigt de manoeuvre de la position fermée à la position ouverte.

Selon un mode de réalisation particulier, le pion et le doigt de manoeuvre sont agencés de sorte que la coopération du pion et du doigt de manoeuvre entraîne le blocage du mors mobile pourvu du doigt de manoeuvre dans la position fermée.

De façon particulière, une extrémité libre du mors mobile forme le doigt de manoeuvre.

Selon un mode de réalisation particulier, le pion est agencé sur une extrémité libre du mors fixe.

De façon particulière, le pion s'étend à la verticale du mors fixe sur lequel il est agencé.

Selon un mode de réalisation particulier, chaque mors fixe est d'un seul tenant avec la plateforme correspondante.

De façon particulière, chaque dispositif de maintien est fixé à une face inférieure de la plateforme correspondante, la face supérieure de ladite plateforme, opposée à la face inférieure, étant inclinée en direction du dispositif de maintien correspondant.

Selon un mode de réalisation particulier, l'élément élastique est une lame ressort ayant une portion d'extrémité solidaire du mors fixe et une portion d'extrémité solidaire du mors mobile pour porter le mors mobile.

### BREVE DESCRIPTION DES DESSINS

L'invention sera mieux comprise à la lumière de la description qui suit d'un mode de réalisation non limitatif de l'invention.

Il sera fait référence aux figures ci-jointes, parmi lesquelles :
- la figure 1 est une vue de dessus schématique d'une installation de traitement conforme à l'invention, les dispositifs de maintien de l'installation n'étant pas représentés,
- la figure 2 est une vue agrandie de la zone I de la figure 1,
- la figure 3 est une vue agrandie de la zone II de la figure 1,
- la figure 4 est une vue agrandie de la zone III de la figure 1,
- la figure 5 est une vue agrandie de la zone IV de la figure 1,
- les figures 6a et 6b sont des vues en perspective du dispositif de maintien représenté aux figures 2 et 3, le dispositif étant illustré respectivement en position fermée et en position ouverte ;
- les figures 7a et 7b sont des vues en perspective du dispositif de maintien représenté aux figures 3 et 4, le dispositif étant illustré respectivement en position fermée et en position ouverte ;
- les figures 8a et 8b sont des vues en perspective du dispositif de maintien représenté aux figures 4 et 5, le dispositif étant illustré respectivement en position fermée et en position ouverte ;
- les figures 9a et 9b sont des vues en perspective du dispositif de maintien représenté aux figures 2 et 5, le dispositif étant illustré respectivement en position fermée et en position ouverte ;
- les figures 10 à 13 sont des vues en perspective de variantes des dispositifs de maintien illustrés aux figures 2 à 9b, lesdites variantes étant illustrées en position fermée.

### DESCRIPTION DETAILLEE DE L'INVENTION

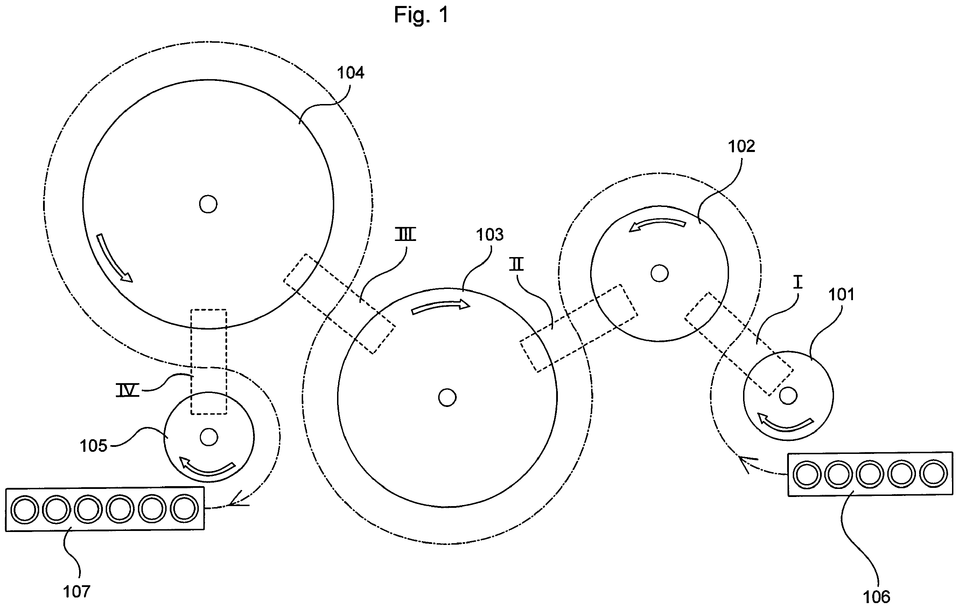

En référence à la figure 1, l'installation de traitement de récipients selon l'invention est ici destinée à traiter des récipients ayant un corps et un col comportant une collerette surmontée d'un goulot 100.

L'installation comporte une pluralité de plateformes rotatives adjacentes, à savoir par exemple deux étoiles de transfert (première plateforme 101 en entrée et cinquième plateforme 105 en sortie), un carrousel de stérilisation (deuxième plateforme 102), un carrousel de remplissage (troisième plateforme 103), et un carrousel de bouchage (quatrième plateforme 104). La deuxième 102, la troisième 103 et la quatrième plateforme 104 sont surmontées respectivement d'un dispositif de stérilisation, d'un dispositif de remplissage et d'un dispositif de bouchage non représentés.

L'installation définit ici une trajectoire 1 de déplacement des récipients dans l'installation de telle manière que le centre du goulot soit centré sur cette trajectoire 1. La trajectoire 1 s'enroule partiellement autour des cinq plateformes. L'installation comprend un dispositif d'introduction des récipients 106 dans l'installation qui amène les récipients jusqu'à la première plateforme 101 et un dispositif d'évacuation 107 pour prendre en charge les récipients portés par la cinquième plateforme 105 et les sortir de l'installation. Les dispositifs 106 et 107 sont par exemple des vis de transport, des convoyeurs de type tapis roulant ou autres.

Chaque plateforme est pourvue d'une pluralité de dispositifs de maintien permettant d'assurer le maintien des récipients au niveau de leur goulot 100 soit en enserrant directement le goulot soit en enserrant le bouchon venant recouvrir le goulot.

De préférence, chaque dispositif de maintien est fixé à une face inférieure de la plateforme correspondante. La face supérieure de chaque plateforme, opposée à la face inférieure de la plateforme respective, est inclinée en direction des dispositifs de maintien correspondant.

De la sorte, si un fluide de nettoyage ou de stérilisation est projeté sensiblement au centre de l'une des plateformes, ledit fluide de nettoyage va s'écouler naturellement le long de la pente de la surface supérieure de la plateforme. Puis le fluide de nettoyage va naturellement se déverser des bords de la plateforme sur les dispositifs de maintien respectifs. Ainsi sensiblement toute la face supérieure de la plateforme et une partie importante des dispositifs de maintien auront été en contact avec le fluide de nettoyage. Il est ainsi très simple de nettoyer ou de stériliser une partie importante de l'installation en projetant le produit au centre de chacune des plateformes.

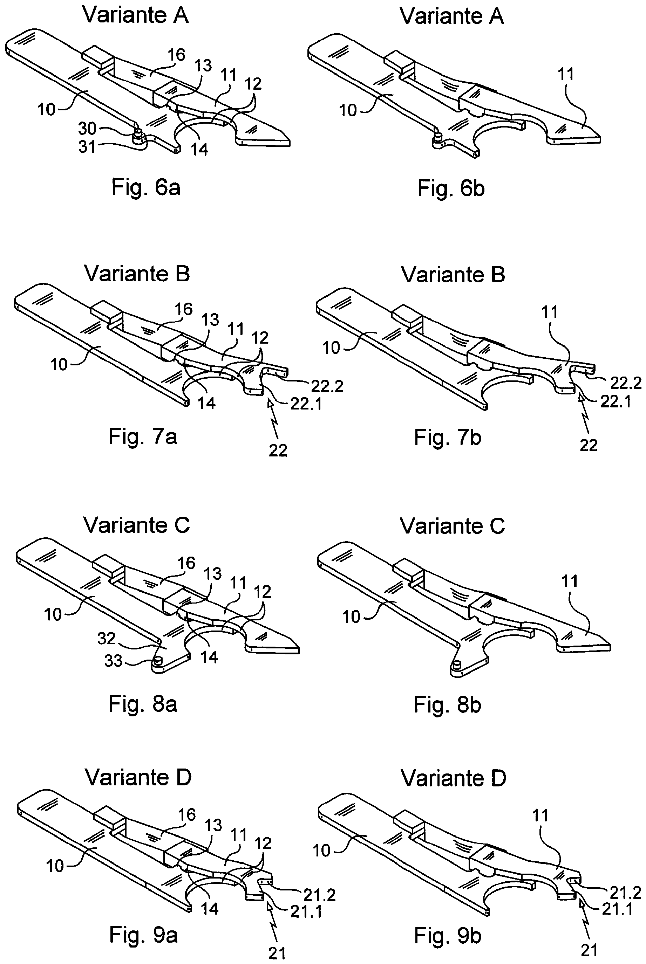

En référence aux figures 6a, 6b, 7a, 7b, 8a, 8b, 9a et 9b les dispositifs de maintien des différentes plateformes vont être à présent décrits. Les éléments identiques ou analogues d'une variante à une autre porteront la même référence numérique.

Chaque dispositif de maintien comporte un mors 10 fixe qui est ici d'un seul tenant avec la plateforme correspondante.

Chaque dispositif de maintien comporte en outre un mors mobile 11 monté sur le mors fixe 10 pour être déplaçable relativement au mors fixe 10 entre :
- une position fermée dans laquelle le mors fixe 10 et le mors mobile 11 définissent une section de passage inférieure à une section transversale du goulot 100 du récipient de sorte que, en présence d'un récipient entre les mors du dispositif, les mors enserrent le goulot 100 du récipient ; et
- une position ouverte de libération du récipient où l'extrémité libre du mors mobile 11 est décalée de l'extrémité libre du mors fixe 10 de sorte à définir une section de passage supérieure à une section transversale du goulot.

Ainsi, le mors fixe 10 et le mors mobile 11 ne s'ouvrent pas de manière symétrique par rapport à une direction radiale de la plateforme correspondante : seul le mors mobile 11 s'ouvre et se ferme relativement au mors fixe 10 pour venir maintenir ou libérer le récipient.

L'extrémité libre du mors fixe 10 et l'extrémité libre du mors mobile 11 sont par exemple pourvues de découpe circulaire 12 pour enserrer le récipient au niveau du goulot 100. Par extrémité libre, on entend bien sûr les portions des mors qui sont destinées à venir enserrer les récipients par opposition aux portions des mors reliées à l'installation ou à l'autre mors.

Les extrémités libres du mors fixe 10 et du mors mobile 11 s'étendent parallèlement l'une par rapport à l'autre. L'extrémité libre du mors mobile 10 s'étend en outre en dessous de l'extrémité libre du mors fixe 11.

Le mors fixe 10 et le mors mobile 11 sont tous deux de formes oblongues.

De préférence, le mors mobile 11 est agencé de sorte que, lors du passage de la position ouverte à la position fermée, le mors mobile 11 exerce un effort de serrage sur le récipient à maintenir qui s'étend vers le centre du goulot 100 du récipient et selon une direction transversale à une direction longitudinale du mors fixe 10.

Ainsi, le mors mobile 11 exerce un effort transversal sur le goulot 100 et non un effort s'étendant selon une direction perpendiculaire à la direction longitudinale du mors fixe, ce qui permet d'assurer un meilleur maintien du goulot 100 dans le dispositif de maintien.

De préférence, le mors fixe 10 comporte une première butée 13 définissant la position fermée du mors mobile 11. Ici la première butée 13 est formée directement dans l'une des parois latérales du mors fixe 10. La première butée 13 coopère avec un bord latéral du mors mobile 11 pour arrêter le mouvement du mors mobile 11 relativement au mors fixe 10.

Préférentiellement, le mors fixe 10 comporte une deuxième butée 14 définissant la position ouverte du mors mobile 11. La deuxième butée 14 est ici formée directement dans la même paroi latérale du mors fixe 10 que celle dans laquelle est formée la première butée 13. La deuxième butée 14 coopère avec un épaulement ménagé dans le mors mobile 11 pour arrêter le mouvement du mors mobile 11 relativement au mors fixe 10.

De préférence, chaque dispositif de maintien comporte en outre une lame ressort 16 ayant une portion d'extrémité solidaire du mors fixe 10 correspondant et une portion d'extrémité solidaire du mors mobile 11 correspondant pour porter le mors mobile 11. La lame ressort 16 relie ainsi les deux mors pour autoriser à la fois le déplacement du mors mobile 11 relativement au mors fixe 10 et pour rappeler le mors mobile 11 vers la position fermée. Les extrémités de la lame ressort 16 sont par exemple solidarisées aux mors respectifs par des vis.

Ainsi, la lame ressort autorise à elle seule le déplacement du mors mobile relativement au mors fixe et le rappel du mors mobile en position fermée. Les dispositifs de maintien de l'installation comportent ainsi peu de pièces et s'avèrent donc simple et rapide à nettoyer.

En outre, la lame ressort s'avère en elle-même aisée à nettoyer. En effet, la facilité d'accès à toutes les portions de la surface extérieure de la lame et la simplicité de sa forme permettent de nettoyer rapidement et efficacement la lame sans avoir à la démonter du dispositif de maintien.

De préférence, la lame ressort 16 est agencée de sorte que le mors mobile 11 puisse se déplacer de la position fermée (figures 6a, 7a, 8a et 9a) à une position intermédiaire par pivotement du mors mobile 11 autour d'un premier centre de rotation situé sur la première butée 13, la lame ressort 16 se déformant pour autoriser ce déplacement. La lame ressort 16 est en outre agencée de sorte que le mors mobile 11 se déplace de la position intermédiaire à la position ouverte (figures 6b, 7b, 8b et 9b) par pivotement du mors mobile 11 autour d'un deuxième centre de rotation décalé en arrière de la première butée 13 et des extrémités libres des mors, la lame ressort 16 se déformant encore davantage pour autoriser ce déplacement.

La deuxième butée 14 est préférentiellement agencée pour éviter une déformation plastique de la lame ressort 16 : lorsque le mors mobile 11 est en position ouverte la lame ressort 16 est ainsi seulement déformée élastiquement. La deuxième butée 14 est agencée de telle manière que la résultante d'un effort d'ouverture du mors mobile 11 au-delà de la position d'ouverture s'étende selon une direction tangente à la lame ressort 16. De la sorte, on évite qu'un opérateur déforme plastiquement la lame ressort 16 en tentant d'ouvrir manuellement de manière excessive le dispositif de maintien par exemple lors d'une opération de maintenance.

La lame ressort 16 a une forme sensiblement rectangulaire. Ici la lame ressort 16 a une largeur s'étendant perpendiculairement au plan des mors 10, 11 et une longueur s'étend parallèlement à une direction longitudinale des mors. Ainsi, la lame ressort 16 est agencée de sorte qu'un axe de flexion de la lame ressort 16 soit parallèle à l'axe de rotation du mors mobile 11 autour du premier centre de rotation et à l'axe de rotation du mors mobile 11 autour du deuxième centre de rotation.

Il peut s'avérer nécessaire de placer l'installation de traitement dans une enceinte à atmosphère contrôlée, un flux de gaz contrôlé s'écoulant alors du plafond de l'enceinte vers l'installation de traitement. L'agencement astucieux de la lame ressort 16 permet ainsi de s'assurer que la lame ressort 16 ne perturbe que très peu l'écoulement de ce flux relativement à une lame ressort qui s'étendrait dans un même plan que le mors fixe 10 et le mors mobile 11.

En outre, de par cet agencement de la lame ressort 16, les deux faces principales de la lame ressort 16, c'est-à-dire les deux faces de la lame ressort ayant les surfaces les plus importantes qui sont sensiblement verticales, peuvent être exposées au fluide tombant de la face supérieure de la plateforme correspondante. Ceci est particulièrement avantageux lorsque le fluide est un produit nettoyant ou stérilisant qui peut alors traiter les deux faces principales de la lame ressort.

De préférence, la lame ressort 16 a une largueur importante. Par « importante », on entend que la lame ressort 16 a une largeur supérieure à au moins un tiers de la longueur de la lame ressort 16.

Ainsi, la lame ressort 16 peut plus aisément stabiliser le mors mobile 11 relativement au mors fixe 10 et donc limiter les mouvements parasites du mors mobile 11 par rapport au mors fixe 10 autres que les mouvements de rotation du mors mobile 11 autour des deux centres de rotation. La lame ressort 16 permet en outre de s'affranchir d'un éventuel pion de frottement qui est utilisé dans des dispositifs de maintien de l'art antérieur, pion de frottement usuellement difficile à nettoyer.

Selon l'invention, pour chaque dispositif de maintien de la première plateforme 101, les mors des dispositifs de maintien de la première plateforme 101 et les mors des dispositifs de maintien de la deuxième plateforme 102 sont pourvus de moyens de leur coopération pour permettre en service le transfert d'un récipient de la première plateforme 101 à la deuxième plateforme 102 par la simple coopération des mors. En outre, les mors des dispositifs de maintien de la deuxième plateforme 102 et les mors des dispositifs de maintien de la troisième plateforme 103 sont pourvus de moyens de leur coopération pour permettre en service le transfert d'un récipient de la deuxième plateforme 102 à la troisième plateforme 103 par la simple coopération des mors. De plus, les mors des dispositifs de maintien de la troisième plateforme 103 et les mors des dispositifs de maintien de la quatrième plateforme 104 sont pourvus de moyens de leur coopération pour permettre en service le transfert d'un récipient de la troisième plateforme 103 à la quatrième plateforme 104 par la simple coopération des mors. Enfin, les mors des dispositifs de maintien de la quatrième plateforme 104 et les mors des dispositifs de maintien de la cinquième plateforme 105 sont pourvus de moyens de leur coopération pour permettre en service le transfert d'un récipient de la quatrième plateforme 104 à la cinquième plateforme 105 par la simple coopération des mors.

De façon particulière, les dispositifs de maintien d'une même plateforme sont tous identiques. Les différents dispositifs de maintien d'une même plateforme sont configurés pour pouvoir coopérer avec n'importe lequel des dispositifs de maintien de la ou des plateformes consécutives.

A cet effet, en référence aux figures 9a et 9b, les dispositifs de maintien de la première plateforme 101 et de la cinquième plateforme 105 comportent tous les mêmes moyens de coopération et seront appelés par la suite dispositifs de maintien selon la variante D. Les moyens de coopération des dispositifs de maintien selon la variante D comportent un doigt de manoeuvre 21 qui est agencé sur le mors mobile 11 de chacun desdits dispositifs.

De préférence, le doigt de manoeuvre 21 est formé directement par une découpe de l'extrémité libre du mors mobile 11. Le doigt de manoeuvre 21 s'étend donc ici parallèlement au reste de l'extrémité libre. L'extrémité libre est conformée de sorte que le doigt de manoeuvre 21 comporte une portion 21.1 destinée à s'enrouler autour du goulot et une portion 21.2 divergeant par rapport à la portion 21.1 pour former un V avec la portion 21.1.

En référence aux figures 7a et 7b, les dispositifs de maintien de la troisième plateforme 103 comportent tous les mêmes moyens de coopération et seront appelés par la suite dispositifs de maintien selon la variante B. Les dispositifs de maintien selon la variante B se différencient des dispositifs de maintien selon la variante D au niveau de la forme de leur doigt de manoeuvre, référencé 22, dont les portions 22.1 et 22.2 forment un V un peu plus profond et écarté que celui formé par les portions 21.1 et 21.2 des doigts de manoeuvre 21 des dispositifs de maintien selon la variante D. Plus précisément, la portion 22.2 est plus écartée et plus longue que la portion 21.2.

En référence aux figures 6a et 6b, les dispositifs de maintien de la deuxième plateforme 102 comportent tous les mêmes moyens de coopération et seront appelés par la suite dispositifs de maintien selon la variante A. Les moyens de coopération des dispositifs de maintien selon la variante A comportent un pion 30 qui est agencé sur le mors fixe 10 de chacun desdits dispositifs.

De façon particulière, chaque extrémité libre du mors fixe 10 comporte une excroissance 31 s'étendant dans un même plan que le reste de l'extrémité libre et perpendiculairement à la direction longitudinale du mors fixe 10. Le pion 30 est ici monté sur l'excroissance 31 de sorte à s'étendre à la verticale de ladite excroissance 31.

En référence aux figures 8a et 8b, les dispositifs de maintien de la quatrième plateforme 104 comportent tous les mêmes moyens de coopération et seront appelés par la suite dispositifs de maintien selon la variante C. Les dispositifs de maintien selon la variante C se différencient des dispositifs de maintien selon la variante A au niveau de l'agencement de l'excroissance, qui est référencée 32, portant le pion qui porte la référence 33. En l'occurrence ici, l'excroissance 32 de la variante C s'étend consécutivement à la découpe circulaire du mors fixe 10 de sorte que le pion 33 est plus éloigné de la plateforme 104 sur laquelle est fixé le dispositif de maintien de la variante C que le pion 30 ne l'est de la plateforme 102 portant le dispositif de maintien de la variante A. En outre, l'excroissance 32 de la variante C est plus longue de sorte que le pion 33 est plus éloigné du reste de l'extrémité libre que dans la variante A.

Le cheminement d'un récipient dans l'installation va être à présent décrit en référence aux figures 1, 2, 3, 4, 5, 6a, 6b, 7a, 7b, 8a, 8b, 9a et 9b.

Le récipient est chargé dans la première plateforme 101 grâce au dispositif d'introduction qui force le goulot 100 du récipient dans l'un des dispositifs de maintien version D de la première plateforme 101. Le dispositif de maintien version D enserre alors le récipient de sorte à assurer le maintien du récipient autour de la première plateforme 101.

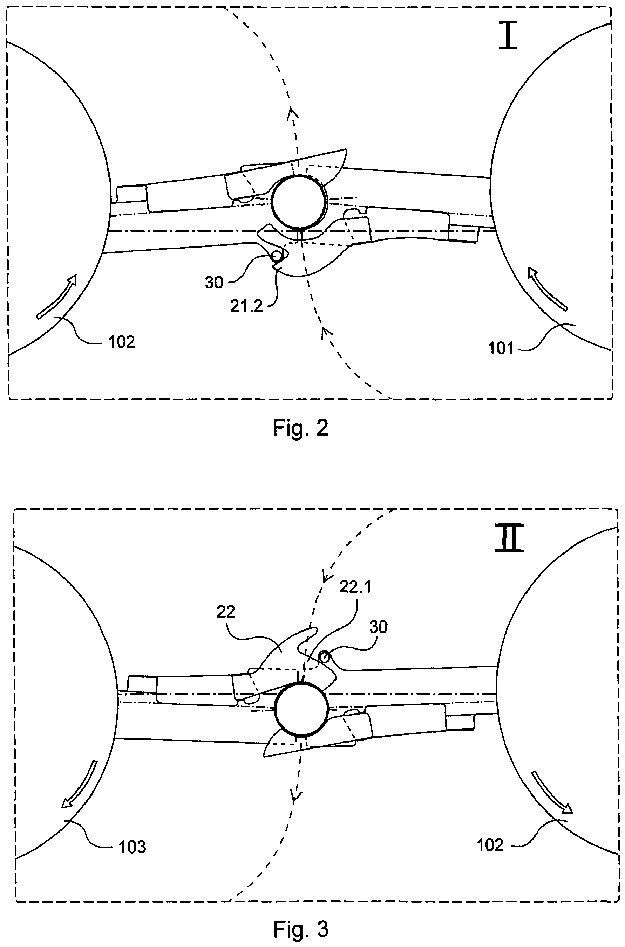

A mesure que le dispositif de maintien version D portant le récipient s'approche du point de tangence de la première plateforme 101 avec la deuxième plateforme 102, le dispositif de maintien version D portant le récipient arrive en regard de l'un des dispositifs de maintien version A de la deuxième plateforme 102 de sorte qu'au point de tangence le récipient se trouve chargé sur les deux dispositifs de maintien. Plus précisément, l'extrémité libre du mors mobile 11 de ce dispositif de maintien version A de la deuxième plateforme 102 et le mors fixe 10 du dispositif de maintien version D passe l'un au dessus de l'autre et le mors mobile 11 du dispositif de maintien version A est déplacé par le goulot du récipient de la position fermée à la position ouverte sous l'action du déplacement du récipient le long de sa trajectoire. La lame ressort 16 du dispositif selon la variante A ramène ensuite le mors mobile 11 du dispositif de maintien selon la variante A en position fermée de sorte qu'au point de tangence de la première plateforme et de la deuxième plateforme (figure 2), les deux dispositifs de maintien selon la variante A et selon la variante D enserrent tous deux le récipient et sont donc capables de maintenir chacun le récipient.

Le mouvement de rotation des plateformes se poursuivant, le pion 30 du dispositif de maintien selon la variante A vient en contact avec la portion 21.2 du doigt de manoeuvre 21 du dispositif de maintien selon la variante D. A mesure que les dispositifs de maintien variante A et variante D s'éloignent du point de tangence, le pion 30 exerce une pression sur la portion 21.2 du doigt de manoeuvre 21 de manière à déplacer le mors mobile 11 du dispositif de maintien variante D de sa position fermée à sa position ouverte. Le dispositif de maintien variante A libère ainsi le récipient du dispositif de maintien variante D : seul le dispositif de maintien variante A enserre alors le récipient et le récipient peut continuer sa trajectoire dans l'installation en se déplaçant autour de la deuxième plateforme 102.

A mesure que le dispositif de maintien version A s'approche du point de tangence de la deuxième plateforme 102 avec la troisième plateforme 103, le dispositif de maintien version A portant le récipient arrive en regard de l'un des dispositifs de maintien version B de la troisième plateforme 103. L'extrémité libre du mors fixe 10 de ce dispositif de maintien version B de la troisième plateforme 103 et le mors mobile 11 du dispositif de maintien version A passe l'un au dessus de l'autre et le mors mobile 11 du dispositif de maintien B est déplacé par le goulot du récipient de la position fermée à la position ouverte sous l'action du déplacement du récipient le long de sa trajectoire. La lame ressort 16 du dispositif selon la variante B ramène ensuite le mors mobile 11 du dispositif selon la variante B en position fermée de sorte qu'au point de tangence de la deuxième plateforme et de la troisième plateforme (figure 3), les deux dispositifs de maintien selon la variante A et selon la variante B enserrent tous deux le récipient et sont donc capables de maintenir chacun le récipient. Le pion 30 du dispositif de maintien selon la variante A vient en contact avec la portion 22.1 du doigt de manoeuvre 22 du dispositif de maintien selon la variante B. A mesure que les dispositifs de maintien variante A et variante B s'éloignent du point de tangence, le pion 30 exerce une pression sur la portion 22.1 du doigt de manoeuvre 22 de telle manière le pion 30 maintient le mors mobile 11 du dispositif de maintien variante B en position fermée, le mors mobile 11 du dispositif de maintien variante A étant déplacée par le goulot de sa position fermée à sa position ouverte sous l'action du déplacement du récipient le long de sa trajectoire autour de la troisième plateforme 103. Ainsi, seul le dispositif de maintien variante B enserre le récipient et le récipient peut continuer sa trajectoire dans l'installation en se déplaçant autour de la troisième plateforme 103.

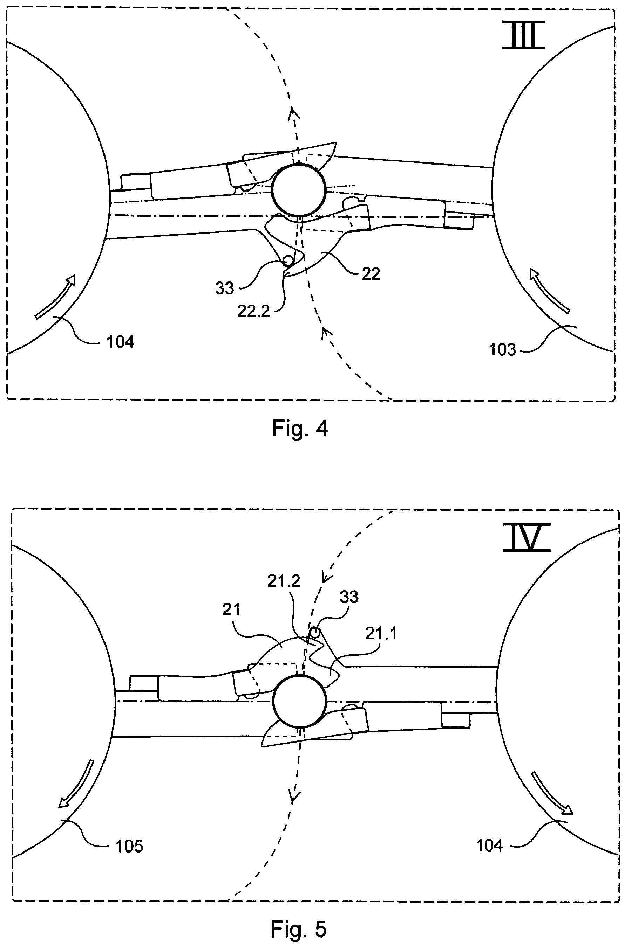

De la même façon, à mesure que le dispositif de maintien version B s'approche du point de tangence de la troisième plateforme 103 avec la quatrième plateforme 104, le mors mobile 11 du dispositif de maintien C est déplacé de la position fermée à la position ouverte par le goulot sous l'action du déplacement du récipient. La lame ressort 16 du dispositif selon la variante C ramène ensuite le mors mobile 11 du dispositif selon la variante C en position fermée de sorte qu'au point de tangence de la troisième plateforme 103 et de la quatrième plateforme 104 (figure 4), les deux dispositifs de maintien selon la variante B et selon la variante C enserrent tous deux le récipient. A mesure que les dispositifs de maintien variante B et variante C s'éloignent du point de tangence, le pion 33 du dispositif de variante C exerce une pression sur la portion 22.2 du doigt de manoeuvre 22 de telle manière que le pion 33 déplace le mors mobile 11 du dispositif de maintien variante B de sa position fermée à sa position ouverte. Ainsi, seul le dispositif de maintien variante C enserre le récipient et le récipient peut continuer sa trajectoire dans l'installation en se déplaçant autour de la quatrième plateforme 104.

Enfin, à mesure que le dispositif de maintien version C s'approche du point de tangence de la quatrième plateforme 104 avec la cinquième plateforme 105, le mors mobile 11 du dispositif de maintien D est déplacé de la position fermée à la position ouverte par le goulot sous l'action du déplacement du récipient. La lame ressort 16 du dispositif selon la variante D ramène ensuite le mors mobile du dispositif selon la variante D en position fermée de sorte qu'au point de tangence de la quatrième plateforme 104 et de la cinquième plateforme 105 (figure 5), les deux dispositifs de maintien selon la variante C et selon la variante D enserrent tous deux le récipient. Le pion 33 exerce une pression sur la portion 21.2 du doigt de manoeuvre 21 de sorte à maintenir le mors mobile 11 du dispositif de maintien variante D en position fermée, le mors mobile 11 du dispositif de maintien variante C étant déplacé par le goulot de sa position fermée à sa position ouverte sous l'action du déplacement du récipient. Ainsi, seul le dispositif de maintien variante D enserre le récipient et le récipient peut continuer sa trajectoire dans l'installation en se déplaçant autour de la cinquième plateforme 105 avant d'être déchargé par le dispositif d'évacuation 106.

Il convient de noter que les différents dispositifs de maintien doivent être agencés dans l'installation de sorte que la coopération du pion d'un dispositif de maintien avec le doigt de manoeuvre d'un autre dispositif de maintien n'intervient qu'une fois que lesdits dispositifs de maintien portent tous deux le récipient soit au voisinage du point de tangence des deux plateformes associées audits dispositifs.

C'est donc la coopération des dispositifs de maintien entre deux plateformes consécutives qui permet le déplacement du récipient entre lesdites plateformes consécutives et donc le déplacement du récipient à travers l'installation de traitement. En particulier, chaque pion permet de provoquer l'ouverture du mors mobile 11 du dispositif de maintien de la plateforme amont et de maintenir fermé le mors mobile 11 du dispositif de maintien de la plateforme aval. Chaque variante de dispositif de maintien est donc configurée pour coopérer avec deux autres variantes de dispositif de maintien.

L'installation de traitement selon l'invention permet ainsi de s'affranchir avantageusement de systèmes galet-came. En outre, il n'est plus nécessaire de relier le mors mobile 11 à la plateforme correspondante, ce qui simplifie grandement la structure du mors mobile 11 mais également du mors fixe 10. Le mors mobile 11 et le mors fixe 10 ont donc ici une forme généralement plane. De plus, le mors mobile 11 a une longueur peu importante, ce qui simplifie sa stabilisation et son guidage par la lame ressort 16. Par « peu importante », on entend que le mors mobile 11 a une longueur comprise entre la moitié et le tiers de la longueur du mors fixe 10.

Les dispositifs de maintien selon l'invention ont ainsi une structure très simple de sorte qu'ils ont un coût de production réduit et qu'ils s'abîment et se salissent moins rapidement comparés aux dispositifs de l'art antérieur. Ils sont en outre très simples à nettoyer.

Bien entendu l'invention n'est pas limitée au mode de réalisation décrit et on peut y apporter des variantes de réalisation sans sortir du cadre de l'invention tel que défini par les revendications.

En particulier, l'installation pourra comprendre un nombre différent de plateformes rotatives. En outre, les dispositifs de maintien pourront assurer un maintien des récipients autrement qu'au niveau du goulot des récipients par exemple au niveau du corps des récipients.

Bien que les installations décrites comportent quatre variantes de dispositif de maintien, chaque variante de dispositif de maintien étant configurée pour coopérer avec deux autres variantes de dispositif de maintien, les installations selon l'invention pourront comporter uniquement deux variantes de dispositifs de maintien configurées pour coopérer ensemble. Par exemple, l'installation pourra ne comporter que deux plateformes avec des dispositifs de maintien variante A et des dispositifs de maintien variante B.

L'installation pourra ne comprendre que deux plateformes consécutives équipées de dispositifs de maintien configurés pour coopérer afin d'autoriser le déplacement du récipient d'une plateforme à une autre, le reste de l'installation ne comportant que des actionnements par des systèmes traditionnels de type galet-came.

En tout état de cause, pour chaque plateforme considérée, chaque dispositif de maintien devra être agencé pour pouvoir coopérer avec au moins l'un des dispositifs de maintien de chacune des plateformes amont et aval de la plateforme considérée pour au moins un sens de rotation de la plateforme considérée.

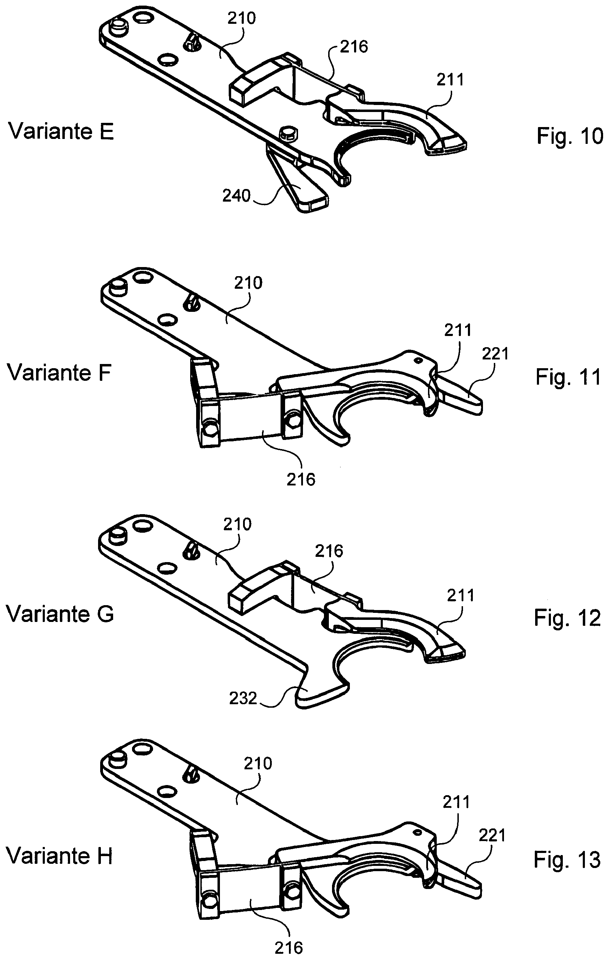

Bien qu'ici les moyens de coopération comportent des ensembles pion/doigt, les moyens de coopération pourront comporter tout autre moyen adapté à la coopération entre les dispositifs de maintien de plateformes amont et aval. Les figures 10 à 13 illustrent une variante dans laquelle les moyens de coopération comportent des ensembles excroissance/doigt en place des ensembles pion/doigt décrits précédemment.

Les moyens de coopération des dispositifs de maintien selon la variante E comportent ainsi une excroissance plane 240 qui est fixée à une extrémité libre du mors fixe 210 de sorte que l'excroissance 240 s'étende dans un plan parallèle à celui dans lequel s'étend le mors fixe 210. Les moyens de coopération des dispositifs de maintien selon la variante F comportent un doigt 221 lié à une extrémité au mors mobile 211 de sorte à s'étendre dans un plan parallèle à celui dans lequel s'étend le mors mobile 211. Les moyens de coopération des dispositifs de maintien selon la variante G comportent une excroissance plane 232 qui est formée directement par l'extrémité libre du mors fixe 210. Les moyens de coopération des dispositifs de maintien selon la variante H comportent un doigt 221 lié à une extrémité au mors mobile 211 de sorte à s'étendre dans un plan parallèle à celui dans lequel s'étend le mors mobile 211.

Ainsi, le dispositif de maintien selon la variante E est configuré pour coopérer avec le dispositif de maintien selon la variante H par l'intermédiaire de l'excroissance 240 et du doigt 221 (pour entraîner le déplacement du mors mobile 211 pourvu du doigt 221 de la position fermée à la position ouverte). Le dispositif de maintien selon la variante F est configuré pour coopérer avec le dispositif de maintien selon la variante G par l'intermédiaire de l'excroissance 232 et du doigt 221 (pour entraîner le déplacement du mors mobile 211 pourvu du doigt 221 de la position fermée à la position ouverte).

Le passage d'un récipient du dispositif de maintien selon la variante E au dispositif de maintien selon la variante F et le passage d'un récipient du dispositif de maintien selon la variante G au dispositif de maintien selon la variante H est assuré par des systèmes de type galet-came ou grâce à des caractéristiques particulières des lames ressorts (différence de raideur et/ou d'orientation entre les lames ressorts des dispositifs de maintien de la plateforme amont et les lames ressorts des dispositifs de maintien de la plateforme aval).La fermeture du dispositif de maintien pourra être commandée par un autre élément élastique que la lame ressort comme par exemple un ressort de compression ou de torsion.

De préférence, le dispositif de maintien est réalisé entièrement en métal en particulier lorsqu'il est amené à être utilisé dans une station de décontamination par faisceau d'électrons.

En variante, dans d'autres applications, le dispositif de maintien peut comprendre des pièces en matière plastique.

Un mors peut être équipé d'un pion traversant le mors ou de deux pions décalés dans un plan vertical pour pouvoir agir sur le mors libre des dispositifs de maintien d'une plateforme amont et sur le mors libre des dispositifs de maintien d'une plateforme aval.

Par pion, on entend tout élément solidaire du mors fixe (qu'il y soit rapporté ou qu'il soit usiné directement sur celui-ci) ayant une forme adaptée à coopérer avec le doigt de manoeuvre des dispositifs de maintien des plateformes adjacentes.

On pourra prévoir que les dispositifs de maintien d'une plateforme amont ait une lame ressort de raideur inférieure aux lames ressort des dispositifs de maintien d'une plateforme aval de telle manière que le dispositif de maintien de la plateforme aval arrache le récipient du dispositif de maintien de la plateforme amont.

De même on pourra prévoir que les dispositifs de maintien d'une plateforme amont ait une lame ressort s'étendant selon une direction moins inclinée relativement à la direction selon laquelle s'étend le mors fixe correspondant que la lame ressort des dispositifs de maintien d'une plateforme aval de telle manière que le dispositif de maintien de la plateforme aval arrache le récipient du dispositif de maintien de la plateforme amont.

## Revendications

1. Installation de traitement de récipients comportant au moins :
- une première plateforme (101, 102, 103, 104, 105) comprenant au moins un premier dispositif de maintien comportant une première paire de mors; et
- une deuxième plateforme (101, 102, 103, 104, 105) comprenant au moins un deuxième dispositif de maintien comprenant une deuxième paire de mors,
chaque paire de mors comportant un mors fixe (10, 210), un mors mobile (11, 211) déplaçable entre une position fermée de maintien du récipient et une position ouverte de libération du récipient et un élément élastique (16, 216) agencé pour rappeler le mors mobile vers la position fermée, l'installation étant **caractérisée en ce que** les deux paires de mors sont pourvues de moyens de leur coopération (21, 22, 30, 33, 221, 232, 240) pour permettre, en service, le transfert du récipient d'une plateforme à une autre par la coopération des paires de mors, les moyens de coopération étant configurés pour que l'une des paires de mors puisse agir sur le déplacement du mors mobile de l'autre paire de mors relativement au mors fixe correspondant.

2. Installation selon la revendication 1, dans laquelle les moyens de coopération comportent un pion (30, 33) qui est agencé sur le mors fixe (10) de l'une des paires de mors et un doigt de manoeuvre (21, 22) qui est agencé sur le mors mobile (11) de l'autre paire de mors de telle manière que le pion prenne contact avec le doigt de manoeuvre au voisinage d'un point de tangence des plateformes.

3. Installation selon la revendication 2, dans laquelle le pion (30, 33) et le doigt de manoeuvre (21, 22) sont agencés de sorte que la coopération du pion et du doigt de manoeuvre entraîne le déplacement du mors mobile pourvu du doigt de manoeuvre de la position fermée à la position ouverte.

4. Installation selon la revendication 2, dans laquelle le pion (30, 33) et le doigt de manoeuvre (21, 22) sont agencés de sorte que la coopération du pion et du doigt de manoeuvre entraîne le blocage du mors mobile pourvu du doigt de manoeuvre dans la position fermée.

5. Installation selon la revendication 2, dans laquelle une extrémité libre du mors mobile (11) forme le doigt de manoeuvre (21, 22).

6. Installation selon la revendication 2, dans laquelle le pion (30, 33) est agencé sur une extrémité libre du mors fixe (10).

7. Installation selon la revendication 2, dans laquelle le pion (30, 33) s'étend à la verticale du mors fixe (10) sur lequel il est agencé.

8. Installation selon la revendication 1, dans laquelle les moyens de coopération comportent une excroissance plane (232, 240) qui est agencée sur le mors fixe (210) de l'une des paires de mors et un doigt de manoeuvre (221) qui est agencé sur le mors mobile (211) de l'autre paire de mors de telle manière que l'excroissance prenne contact avec le doigt de manoeuvre au voisinage d'un point de tangence des plateformes.

9. Installation selon la revendication 8, dans laquelle l'excroissance (232, 240) et le doigt de manoeuvre (221) sont agencés de sorte que la coopération de l'excroissance et du doigt de manoeuvre entraîne le déplacement du mors mobile pourvu du doigt de manoeuvre de la position fermée à la position ouverte.

10. Installation selon la revendication 1, dans laquelle chaque mors fixe est d'un seul tenant avec la plateforme correspondante.

11. Installation selon la revendication 1, dans laquelle chaque dispositif de maintien est fixé à une face inférieure de la plateforme correspondante, la face supérieure de ladite plateforme, opposée à la face inférieure, étant inclinée en direction du dispositif de maintien correspondant.

12. Installation selon la revendication 1, dans laquelle l'élément élastique (16) est une lame ressort ayant une portion d'extrémité solidaire du mors fixe (10) et une portion d'extrémité solidaire du mors mobile (11) pour porter le mors mobile.

## Patentansprüche

1. Anlage zur Behandlung von Behältern, mindestens umfassend:
- eine erste Plattform (101, 102, 103, 104, 105), die mindestens eine erste Haltevorrichtung umfasst, die ein erstes Paar von Spannbacken enthält; und
- eine zweite Plattform (101, 102, 103, 104, 105), die mindestens eine zweite Haltevorrichtung umfasst, die ein zweites Paar von Spannbacken enthält,
wobei jedes Paar von Spannbacken eine ortsfeste Spannbacke (10, 210), eine bewegliche Spannbacke (11, 211), die zwischen einer geschlossenen Halteposition zum Halten des Behälters und einer geöffneten Freigabeposition zur Freigabe des Behälters beweglich ist, und ein elastisches Element (16, 216) umfasst, das so angeordnet ist, dass es die bewegliche Spannbacke in die geschlossene Position rückstellt, wobei die Anlage **dadurch gekennzeichnet ist, dass** die beiden Paare von Spannbacken mit Mitteln (21, 22, 30, 33, 221, 232, 240) für ihr Zusammenwirken versehen sind, um im Betrieb die Übergabe des Behälters von einer Plattform zu einer anderen durch das Zusammenwirken der Paare von Spannbacken zu ermöglichen, wobei die Zusammenwirkungsmittel so konfiguriert sind, dass eines der Paare von Spannbacken auf die Bewegung der beweglichen Spannbacke des anderen Paares von Spannbacken relativ zur entsprechenden ortsfesten Spannbacke einwirken kann.

2. Anlage nach Anspruch 1, bei der die Zusammenwirkungsmittel einen Zapfen (30, 33) umfassen, der an der ortsfesten Spannbacke (10) des einen der Paare von Spannbacken angeordnet ist, sowie einen Betätigungsfinger (21, 22), der an der beweglichen Spannbacke (11) des anderen Paares von Spannbacken angeordnet ist, derart, dass der Zapfen mit dem Betätigungsfinger in der Nähe eines Tangentialpunktes der Plattformen in Kontakt kommt.

3. Anlage nach Anspruch 2, bei der der Zapfen (30, 33) und der Betätigungsfinger (21, 22) so angeordnet sind, dass das Zusammenwirken des Zapfens und des Betätigungsfingers die Bewegung der mit dem Betätigungsfinger versehenen beweglichen Spannbacke von der geschlossenen Position in die geöffnete Position verursacht.

4. Anlage nach Anspruch 2, bei der der Zapfen (30, 33) und der Betätigungsfinger (21,22) so angeordnet sind, dass das Zusammenwirken des Zapfens und des Betätigungsfingers die Blockierung der mit dem Betätigungsfinger versehenen beweglichen Spannbacke in der geschlossenen Position verursacht.

5. Anlage nach Anspruch 2, bei der ein freies Ende der beweglichen Spannbacke (11) den Betätigungsfinger (21, 22) bildet.

6. Anlage nach Anspruch 2, bei der der Zapfen (30, 33) an einem freien Ende der ortsfesten Spannbacke (10) angeordnet ist.

7. Anlage nach Anspruch 2, bei der sich der Zapfen (30, 33) senkrecht zur ortfesten Spannbacke (10) erstreckt, an der er angeordnet ist.

8. Anlage nach Anspruch 1, bei der die Zusammenwirkungsmittel einen ebenen Vorsprung (232, 240) umfassen, der an der ortfesten Spannbacke (210) eines der Paare von Spannbacken angeordnet ist, sowie einen Betätigungsfinger (221), der an der beweglichen Spannbacke (211) des anderen Paares von Spannbacken angeordnet ist, derart, dass der Vorsprung mit dem Betätigungsfinger in der Nähe eines Tangentialpunktes der Plattformen in Kontakt kommt.

9. Anlage nach Anspruch 8, bei der der Vorsprung (232, 240) und der Betätigungsfinger (221) so angeordnet sind, dass das Zusammenwirken des Vorsprungs und des Betätigungsfingers die Bewegung der mit dem Betätigungsfinger versehenen beweglichen Spannbacke von der geschlossenen Position in die geöffnete Position verursacht.

10. Anlage nach Anspruch 1, bei der jede ortsfeste Spannbacke in einem Stück mit der entsprechenden Plattform ausgebildet ist.

11. Anlage nach Anspruch 1, bei der jede Haltevorrichtung an einer Unterseite der entsprechenden Plattform befestigt ist, wobei die Oberseite der genannten Plattform, die der Unterseite abgewandt ist, in Richtung der entsprechenden Haltevorrichtung geneigt ist.

12. Anlage nach Anspruch 1, bei der das elastische Element (16) eine Blattfeder ist, die einen Endabschnitt hat, der fest mit der ortsfesten Spannbacke (10) verbunden ist, sowie einen Endabschnitt, der fest mit der beweglichen Spannbacke (11) verbunden ist, um die bewegliche Spannbacke zu tragen.

## Claims

1. An installation for treating containers, the installation comprising at least:
a first platform (101, 102, 103, 104, 105) having at least a first holder device comprising a first pair of jaws; and
a second platform (101, 102, 103, 104, 105) having at least a second holder device comprising a second pair of jaws;
each pair of jaws comprising a stationary jaw (10, 210), a movable jaw (11, 211) movable between a closed position for holding a container and an open position for releasing the container, and a resilient element (16, 216) arranged to urge the movable jaw towards the closed position, the installation being **characterized in that** the two pairs of jaws are provided with co-operation means (21, 22, 30, 33, 221, 232, 240) to enable them, in operation, to transfer a container from one platform to another by co-operation between the pairs of jaws, the co-operation means being configured so that one of the pairs of jaws can act on the movement of the movable jaw of the other pair of jaws relative to the corresponding stationary jaw.

2. An installation according to claim 1, wherein the co-operation means comprise a peg (30, 33) that is arranged on the stationary jaw (10) of one of the pair of jaws and a drive finger (21, 22) that is arranged on the movable jaw (11) of the other pair of jaws in such a manner that the peg comes into contact with the drive finger in the vicinity of a point of tangency between the platforms.

3. An installation according to claim 2, wherein the peg (30, 33) and the drive finger (21, 22) are arranged so that the co-operation between the peg and the drive finger leads to the movable jaw provided with the drive finger being moved from the closed position to the open position.

4. An installation according to claim 2, wherein the peg (30, 33) and the drive finger (21, 22) are arranged in such a manner that the co-operation between the peg and the drive finger causes the movable jaw provided with the drive finger to be blocked in the closed position.

5. An installation according to claim 2, wherein the free end of the movable jaw (11) forms the drive finger (21, 22).

6. An installation according to claim 2, wherein the peg (30, 33) is arranged on a free end of the stationary jaw (10).

7. An installation according to claim 2, wherein the peg (30, 33) extends vertically from the stationary jaw (10) on which it is arranged.

8. An installation according to claim 1, wherein the co-operation means comprise a plane projection (232, 240) that is arranged on the stationary jaw (210) of one of the pairs of jaws and a drive finger (221) that is arranged on the movable jaw (211) of the other pair of jaws in such a manner that the projection comes into contact with the drive finger in the vicinity of a point of tangency between the platforms.

9. An installation according to claim 8, wherein the projection (232, 240) and the drive finger (221) are arranged in such a manner that the co-operation between the projection and the drive finger causes the movable jaw provided with the drive finger to move from the closed position to the open position.

10. An installation according to claim 1, wherein the stationary jaw is made integrally with the corresponding platform.

11. An installation according to claim 1, wherein each holder device is fastened to a bottom face of the corresponding platform, the top face of said platform, opposite from the bottom face, sloping down towards the corresponding holder device.

12. An installation according to claim 1, wherein the resilient element (16) is a leaf spring having one end portion secured to the stationary jaw (10) and another end portion secured to the movable jaw (11) in order to carry the movable jaw.
